# EUROPEAN PATENT APPLICATION

(11) **EP 4 700 529 A1**
(43) Date of publication of application: **25.02.2026**
(21) Application number: 25187210.7
(22) Date of filing: 03.07.2025
(51) Int. Cl.: G05G 1/04, G05G 5/05, G05G 5/04, B60K 11/06, F01P 11/10

(54) **MULTI-MODE ACTUATION MECHANISM**

(30) Priority: 20.08.2024 IN 202421062706
(71) Applicant: Deere & Company, Moline, IL 61265 (US)
(72) Inventor: RAVUTHU, SATYAMU, 68163 Mannheim (DE); GUPTA, SAURABH, 68163 Mannheim (DE); VISHWAKARMA, PRATUL, 68163 Mannheim (DE); KAVATHE, SAMEET, 68163 Mannheim (DE); SHAH, NISHANT, 68163 Mannheim (DE)
(74) Representative: Reichert, Christian

(57) **Abstract**

A multi-mode actuation mechanism (10) for operating a system (S) in various modes is disclosed. The mechanism (10) comprising: a lever (12) having a pivot point (18) and a connecting point (20), said pivot point (18) and said connecting point (20) being spaced apart; a cable (16) connecting said lever (12) to the system (S) via said connecting point (20) of said lever (12); a plunger (22) displaceable between an extended position and a retracted position, said plunger (22) being biased to said extended position; a groove (24) defined on said plunger (22); a locking pin (38) displaceable between a locked position and an unlocked position, said locking pin (38) being disposed within said groove (24) in said locked position, said locking pin being substantially perpendicular to said plunger (22), said locking pin (38) being biased to said locked position; a casing (26) partially encasing said plunger (22); and a stopper (44) restricting displacement of said plunger (22) between a plurality of desired position corresponding a required parameter of the system (S).

## Description

### FIELD OF THE INVENTION

The present invention relates to the field of actuating a system between a plurality of modes, corresponding to the requirement of the system.

### BACKGROUND OF THE INVENTION

There are several systems where there is a requirement to operate between multiple modes. One such system is a radiator fan for an off-road vehicle, where it has become important for the radiator fan to perform more than just the function of cooling. The breadth of the modes of radiator fan ranges from the conventional function of cooling to the cleaning of the grill of the hood to enable free flow. This helps in achieving better fuel efficiency across varied geographies by considering duty cycle and engine load usage.

However, there is felt a need for mechanism for actuation of the radiator fan between the different modes, based on requirement.

### OBJECTS OF THE INVENTION

The present invention envisages achieving at least one of the following objects, thereby overcoming the drawbacks of prior art:
An object of the present invention is to provide a mechanism capable of enabling a system to operate between multiple modes
Another object of the present invention is to provide a mechanism capable of enabling reduction of emission as a result of optimum operation of the system.
Yet another object of the present invention is to provide a mechanism which is improve fuel efficiency of the system.

Other objects of the present invention will be apparent when the description of the invention is read in conjunction with the accompanying drawings. The accompanying drawings provided herein are merely illustrative and does not intend to limit the scope and ambit of the present invention.

### SUMMARY OF THE INVENTION

In accordance with the present invention there is provided a multi-mode actuation mechanism for operating a system in various modes. The multi-mode actuation mechanism includes a lever, a plunger encased within a casing and operable by the lever, a locking pin and stopper. The casing partially encases the plunger. The plunger is defined by a groove.

The lever has a pivot point and a connecting point. The lever is pivotable about the pivot point. The pivot point and the connecting point is spaced apart. The connecting point is angularly rotatable about the pivot point. A cable connects the lever to the system via the connecting point of the lever. The plunger displaceable between an extended position and a retracted position. The plunger is biased to the extended position.

The locking pin is displaceable between a locked position and an unlocked position. The locking pin is disposed within the groove in the locked position. The locking pin is substantially perpendicular to the plunger. The locking pin is biased to the locked position. The locking pin is disposed within a housing. The housing is perpendicular to the casing. The locking pin is actuated by a manual operation, a hydraulic operation, a pneumatic operation, an electric operation and an electro-mechanical operation. The plunger and the locking pin are biased by an associated resilient member. The resilient member is a compression spring.

The stopper restricts displacement of the plunger between a plurality of desired position corresponding a required parameter of the system. The stopper has an extension projecting from the lever and a projection. The projection is configured to selectively restrict the extension, corresponding the required parameter of the system. The required parameter is at least one mode of operation of the system.

Various features, aspects and advantages of the present invention will be apparent from the following detailed description of the invention when read in conjunction with the accompanying drawings wherein like numerals represent like components.

### BRIEF DESCRIPTION OF THE ACCOMPANYING DRAWINGS

The present invention will now be described with respect to the accompanying drawings:
Figure 1 illustrates a tractor with a cut-out of a hood of the tractor, indicating elements under the hood;
Figure 2 illustrates the multi-mode actuation mechanism, in accordance with the present invention;
Figure 3 particularly illustrates a locking mechanism, in accordance with the present invention, as illustrated in Figure 2;
Figure 4 to Figure 6 illustrates the locking mechanism, in accordance with the present invention, in multiple modes of operation; and
Figure 7 and Figure 9 illustrates a fan blade of the reversible radiator fan assembly in a plurality of configuration.

### DETAILED DESCRIPTION

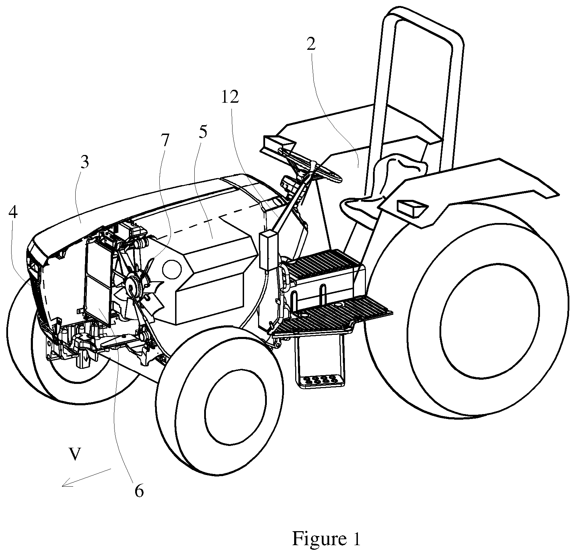

Figure 1 illustrates a tractor (1) having an operator station (2) and a hood (3), specifically illustrating a cross-section of the hood (3) with a grill (4). The cross-section of the hood (3) illustrating major components located under the hood (3) of the tractor (1), such as, an engine (5), a radiator (6) and a radiator fan (7). The radiator fan (7) has a plurality of fan blade (8). The tractor (1) traverses in a forward direction V. Hereinafter, all indicated directions and location of the tractor (1) and all associated components thereof, such as, forward, backward, rear, front, up, above, below, down, up, left and right shall refer to the direction of forward motion V of the tractor (1).

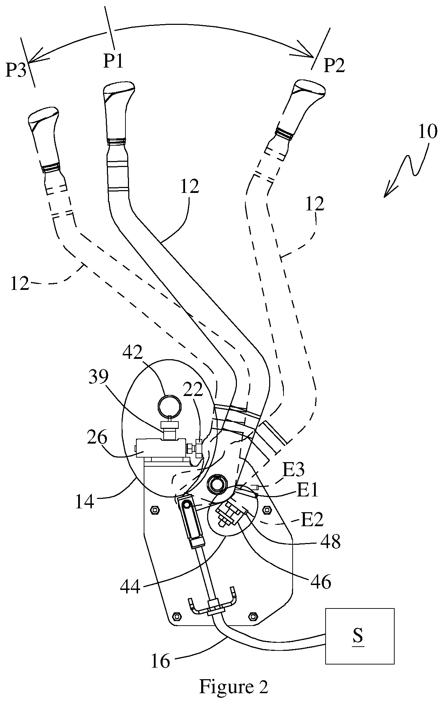

Referring to Figure 2, a multi-mode actuation mechanism (10) is illustrated, as being connected to a system (S). For the purpose of explanation of the present invention, the system (S) will be considered as the radiator fan (7), shown in Figure 1. The multi-mode actuation mechanism (10) includes a lever (12) and a locking arrangement (14). Although the present invention of the multi-mode actuation mechanism (10) will be described with reference to the radiator fan (7), however, a person skilled in the art will appreciate that the present invention may be used in any system which is required to be operated in multiple modes.

The lever (12) is displaceable between a cooling position (P1), a cleaning position (P2), and an eco-position (P3) based on requirement. The lever (12) is held in the required position by the locking arrangement (14), as illustrated in Figure 2. A cable (16) connects the multi-mode actuation mechanism (10) to the system (S), such as, radiator fan (7). The radiator fan (7) is operable in a full cooling mode, a cleaning mode and an economical mode when the lever (12) is respectively in the cooling position (P1), the cleaning position (P2), and the eco-position (P3). The lever (12) has a pivot point (18) and a connecting point (20). The pivot point (18) and the connecting point (20) are spaced apart. The cable (16) is connected to the lever (12) via the connecting point (20) of the lever (12). The lever (12) is pivotable about the pivot point (18). The connecting point (20) is angularly rotatable about the pivot point (18).

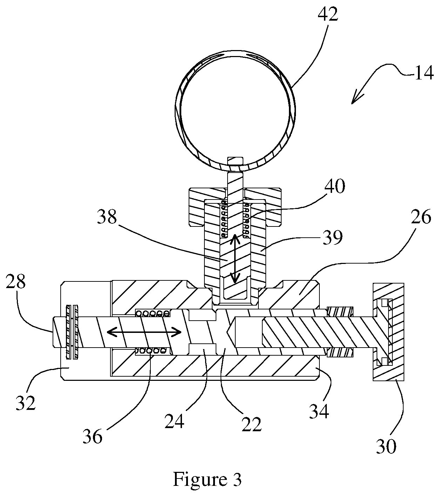

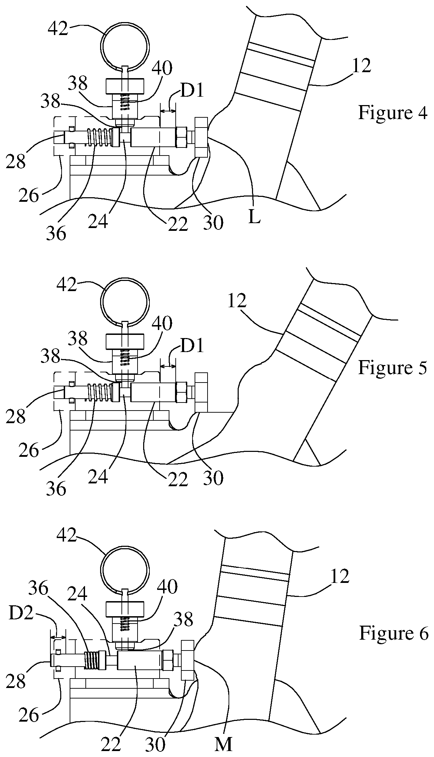

Now particularly referring to Figure 3, the locking arrangement (14) consists of a plunger (22) defined by a groove (24). The groove (24) is substantially perpendicular to the axis of the plunger (22). The plunger (22) is partially disposed within a casing (26). The plunger (22) has an enclosed end (28) and an operational end (30). The casing (26) has a first end (32) and a second end (34). The enclosed end (28) of the plunger (22) is proximate to the first end (32) while the operational end (30) is proximate to the second end (34). The enclosed end (28) is disposed within the casing (26) while the operational end (30) is disposed outside the casing (26). The plunger (22) is displaceable between a first position and a second position. The plunger (22) is displaceable by a distance (D1), as indicated in Figure 4 and Figure 5. The plunger (22) is in the first position in Figure 4 and Figure 5. The plunger (22) is displaceable to a second position, as illustrated in Figure 6, such that, the enclosed end (28) is displaced by a distance (D2). The distance (D2) is equal to the distance (D1). The plunger (22) is biased to the first position by a first spring (36) disposed within the casing (26), proximate to the first end (32). The first spring (36) is a compression spring. The first spring (36) is in expanded configuration within the casing (26) in the first position. The first spring (36) is in contracted configuration in the second position within the casing (26).

The locking arrangement (14) also includes a locking pin (38). The locking pin (38) is disposed substantially perpendicular to the plunger (22). The locking pin (38) is disposed within a housing (39). The housing (39) is perpendicular to the casing (26).

The locking pin (38) is displaceable between a locked position and an unlocked position. In the locked position, the locking pin (38) is disposed within the groove (24). When the lever (12) is in the cooling position (P1) and cleaning position (P2), the locking pin (38) is positioned in the groove (24) to enable the locked position. The locking pin (38) is biased to the locked position, by a second spring (40). The locking pin (38) is actuated by a manual operation, a hydraulic operation, a pneumatic operation, an electric operation or an electro-mechanical operation.

Figure 2 to Figure 6 illustrates a locking pin (38) which is manually operated by lifting using a ring (42). The second spring (40) is in expanded configuration in the locked position. The second spring (40) is in contracted configuration in the unlocked position. When the plunger (22) is in first position, the locking pin (38) is in locked position. When the plunger (22) is in second position, the locking pin (38) is in unlocked position.

Further, the multi-mode actuation mechanism (10) has a stopper (44). The stopper (44) limits displacement of the lever (12) beyond the cleaning position (P2). The stopper (44) includes an extension (46) and a projection (48). The extension (46) is displaceable between E1, E2 and E3 positions, particularly indicated in Figure 2, corresponding to the cooling position (P1), the cleaning position (P2), and the eco-position (P3), respectively. The extension (46) contacts the projection (48), to be in position (E2) to limit movement beyond the cleaning position (P2) of the lever (12). The extension (46) is in the positions E1 and E2 respectively corresponding to the cooling position (P1) and the eco-position (P3), respectively, of the lever (12).

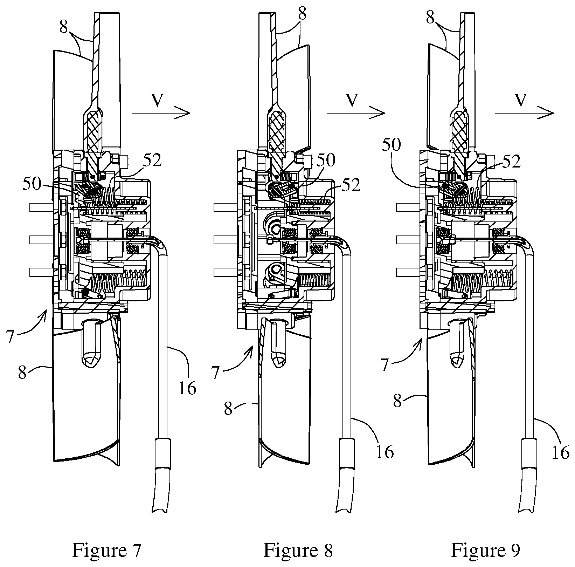

Now, operation of the multi-mode actuation mechanism (10) will be discussed with reference to Figure 2 to Figure 9. During normal operation, the lever (12) is in the cooling position (P1), as illustrated in Figure 2, and the plunger (22) and the locking pin (38) is in first position, as shown in Figure 4. The locking pin (38) is disposed within the groove (24) and the first spring (36) is in expanded configuration while the second spring (36) is also in expanded configuration. Also, the lever (12) is in contact with the plunger (22) at the point (L), indicated in Figure 4. The fan blades (8) are positioned so as to achieve full cooling of the engine. The fan blades (8) preferably subtend an angle in the range of +35 degree to +45 degree, as illustrated on Figure 7.

In case of choking of the grill (4) of the tractor, the lever (12) is displaced to the cleaning position (P2), as illustrated in Figure 2, until the extension (46) contacts the projection (48) and is in the position (E2). The position of the plunger (22) and the locking pin (38) are as illustrated in Figure 5. This causes the radiator fan (7) to be reversed as discussed in IN202121012778. As illustrated in Figure 8, operation of the cable (16) causes the shifter (50) to be linearly displaced within an enclosure (not particularly indicated) of the radiator fan (7) and against the resilience force of the springs (52). This eventually causes movement of the fan blades (8) to the cleaning configuration resulting in the air under the hood (3) to be blown towards the radiator (6). The fan blades (8) preferably subtend an angle in the range of -35 degree to - 45 degree. The air under the hood (3) passes through the radiator (6) and facilitates in loosening and displacing the dirt and chaff from the grill (4) and the radiator (6). This results in cleaning the grill (4) and the radiator (6). The lever (12) is maintained in the cleaning position (P2) by the operator.

Again, when the fan blades (8) are required to be in economy mode, the lever (12) is displaced to the eco-position (P3). To achieve the eco-position (P3) of the lever (12), as shown in Figure 2, the locking pin (38) is lifted to disengage the locking pin (38) from the groove (24), as shown in Figure 6. At this position of the locking pin (38), the second spring (40) is compressed. The lever (12) pushes the plunger (22) at the point (M). Figure 9 illustrates the position of the fan blade (8) in the eco-position (P3) of the lever (12). In the eco-position (P3), the fan blades (8) results in cooling with 65% less power consumption with 45% of airflow compared to the cooling mode. The lever (12) is in the eco-position (P3) during operation such as haulage operation or any other low power consumption application. The lever (12) is maintained in the eco-position (P3), by operation of the spring (52).

The multi-mode actuation mechanism (10) of the present invention helps in providing multiple mode of operation of the system (S) by utilizing simple configuration. Additionally, the multi-mode actuation mechanism (10) helps reducing the daily operating cost by 2% to 4% while ensuring better fuel efficiency.

### TECHNICAL ADVANCEMENT

The present invention has several technical advancements, including but not limited to the realization of:
- a system operating in multiple modes;
- 2% to 4 % reduction in daily operating cost of the system.

While the foregoing specification has been described with respect to at least one embodiment, the present invention can be further modified within the spirit and scope of this invention. This application is therefore intended to cover any variations, uses, or adaptations of the invention using its general principles. Further, this application is intended to cover such departures from the present invention which comes within known or customary practice in the art to which this invention pertains.

## Claims

1. A multi-mode actuation mechanism (10) for operating a system (S) in various modes comprising:
a lever (12) having a pivot point (18) and a connecting point (20), said pivot point (18) and said connecting point (20) being spaced apart;
a cable (16) connecting said lever (12) to the system (S) via said connecting point (20) of said lever (12);
a plunger (22) displaceable between an extended position and a retracted position, said plunger (22) being biased to said extended position;
a groove (24) defined on said plunger (22);
a locking pin (38) displaceable between a locked position and an unlocked position, said locking pin (38) being disposed within said groove (24) in said locked position, said locking pin being substantially perpendicular to said plunger (22), said locking pin (38) being biased to said locked position;
a casing (26) partially encasing said plunger (22); and
a stopper (44) restricting displacement of said plunger (22) between a plurality of desired position corresponding a required parameter of the system (S).

2. The mechanism (10) as claimed in claim 1, wherein said lever (12) is pivotable about said pivot point (18).

3. The mechanism (10) as claimed in claim 1 or 2, wherein said connecting point (20) is angularly rotatable about said pivot point (18).

4. The mechanism (10) as claimed in one of the claims 1 to 3, wherein said locking pin (38) is disposed within a housing (39), said housing (39) being perpendicular to said casing (26).

5. The mechanism (10) as claimed in one of the claims 1 to 4, wherein said locking pin (38) is actuated by at least one of a manual operation, a hydraulic operation, a pneumatic operation, an electric operation and an electro-mechanical operation.

6. The mechanism (10) as claimed in one of the claims 1 to 5, wherein said plunger (22) and said locking pin (38) are biased by an associated resilient member (36 and 40), said resilient member (36 and 40) being a compression spring.

7. The mechanism (10) as claimed in one of the claims 1 to 6, wherein said stopper (44) has an extension (46) projecting from said lever (12) and a projection (48), said projection (48) being configured to selectively restrict said extension (46) corresponding said required parameter of the system (S).

8. The mechanism (10) as claimed in one of the claims 1 to 7, wherein said required parameter (P1, P2, P3) is at least one mode of operation of the system (S).
